# EUROPÄISCHE PATENTSCHRIFT

(11) **EP 2 168 467 B1**
(45) Veröffentlichungstag und Bekanntmachung des Hinweises auf die Patenterteilung: **23.03.2011**
(21) Anmeldenummer: 09011964.5
(22) Anmeldetag: 19.09.2009
(51) Int. Cl.: A47J 31/36, A47J 31/46

(54) **Brühvorrichtung mit einem Drainageventil**
Brewing device with a drainage valve
Dispositif d'ébouillantage doté d'une soupape de drainage

(30) Priorität: 26.09.2008 EP 08405242
(43) Veröffentlichungstag der Anmeldung: 31.03.2010
(73) Patentinhaber: Jura Elektroapparate AG, 4626 Niederbuchsiten (CH)
(72) Erfinder: Büttiker, Philipp, 4625 Oberbuchsiten (CH)
(74) Vertreter: EGLI-EUROPEAN PATENT ATTORNEYS

(56) Entgegenhaltungen:
- EP-A- 0 307 497
- EP-A- 0 538 191
- EP-A- 0 559 620
- EP-A- 0 561 741
- EP-A- 1 312 291

## Beschreibung

Die Erfindung bezieht sich auf Brühvorrichtung mit einem Drainageventil nach dem Oberbegriff des Anspruchs 1.

Aus der Patentschrift EP 0 559 620 B1 ist bereits eine Brühvorrichtung für Kaffee mit einem verschwenkbaren Brühzylinder bekannt, bei der ein Brühwasserzulauf in einen unteren Anschluss am Brühzylinder eingreift. In dem Brühwasserzulauf ist dabei ein Ventil vorgesehen, das sich am Schluss des Brühvorganges öffnet und das Restwasser ablaufen lässt. Dadurch kann eine saubere Brühkammer und ein trockener Kaffeekuchen erzielt werden. Andererseits wird ein zur Reinigung des Fluidsystems eingesetztes Entkalkungsmittel nicht daran gehindert, in die Brühkammer einzudringen und deren Material zu beschädigen. Dadurch wird die Lebensdauer der Einheit massiv verkürzt.

Der vorliegenden Erfindung liegt die Aufgabe zugrunde, die genannten Nachteile zu,vermeiden, und eine Brühvorrichtung mit einem Steuerventil zur Verfügung zu stellen, das eine gezieltere Bereitstellung von Flüssigkeiten in einem Brüh-, Drainage- und Entkalkungsprozess der Vorrichtung zulässt. Das Ventil soll zudem konstruktiv einfach gestaltet und damit besonders zuverlässig, langlebig und kostengünstig sein.

Diese Aufgabe wird durch eine Brühvorrichtung mit einem Drainageventil mit den Merkmalen des Patentanspruchs 1 gelöst.

Ein wesentlicher Punkt der Erfindung besteht dabei darin, dass das Drainageventil in drei unterschiedliche Stellungen gebracht werden kann, denen eine jeweils genau definierte Funktion zugeteilt ist. In einer Brühstellung des Drainageventils wird dabei der Brühflüssigkeitspfad freigegeben und der Drainageflüssigkeitspfad blockiert, wie dies bereits bekannt ist. Ausgehend davon wird in einer Drainagestellung des Drainageventils nun zunächst der Umstand genutzt, dass im Drainageprozess grundsätzlich keine Brühflüssigkeit zugeführt wird, indem z.B. eine dafür zuständige Pumpe nicht aktiviert ist. Dadurch muss der Brühflüssigkeitspfad nicht zusätzlich blockiert sein, wenn der Drainageflüssigkeitspfad freigegeben wird. Dies macht den Aufbau des Drainageventils besonders einfach. Darüber hinaus ist das Drainageventil so ausgelegt, dass in einer Entkalkungsstellung der Brühflüssigkeitspfad zur Brüheinheit bzw. zu einer Brühkammer der Brüheinheit blockiert ist und gleichzeitig ein Entkalkungsflüssigkeitspfad zwischen dem Brühflüssigkeitsbehälter und dem Auslass über das Drainageventil hinweg hergestellt wird. Dadurch ist gewährleistet, dass kein Entkalkungsmittel in die Brühkammer und an Kunststoffteile der Brühvorrichtung gelangen kann, was deren Lebensdauer deutlich erhöht.

Bevorzugte Weiterbildungen der erfindungsgemässen Brühvorrichtung sind in den folgenden Unteransprüchen angegeben.

In einer vorteilhaften Ausführungsform der Brühvorrichtung ist dabei vorgesehen, dass das Drainageventil eine zylinderförmige Hülse mit einem Zulauf für die von dem Brühflüssigkeitsbehälter kommende Brühflüssigkeit und einem Ablauf für die von der Brüheinheit kommende Drainageflüssigkeit aufweist, die so an deren Umfang versetzt voneinander angeordnet sind, dass bei waagerechter Einbaulage der Hülse deren Zulauf an einer höheren Stelle als deren Ablauf liegt.

Eine weitere Vereinfachung des Aufbaus der Brühvorrichtung wird dadurch erzielt, dass das Drainageventil einen Ablauf für die zu der Brüheinheit fliessende Brühflüssigkeit und einen Zulauf für die von der Brüheinheit kommende Drainageflüssigkeit aufweist, und dieser Ablauf und dieser Zulauf als gemeinsamer Brüh- und Drainageanschluss ausgeführt sind. Dadurch kann die Brühvorrichtung verkleinert werden, was wiederum Kosten spart. Andererseits kann der durch Zusammenlegung von Ablauf und Zulauf gewonnene Bauraum auch genutzt werden, um zusätzliche Funktionen der Brühvorrichtung zu realisieren.

In einer konkreten Ausgestaltung der Brühvorrichtung ist vorgesehen, dass das Drainageventil einen taillierten Stössel (d.h. einen Stössel welcher einen "Taillenabschnitt", d.h. einen als Taille ausgebildeten Längsabschnitt, und an jedem der beiden Enden dieses Taillenabschnitts jeweils einen "Flanschabschnitt" mit einem im Vergleich zum Taillenabschnitt vergrösserten Durchmesser aufweist) umfasst, der zentrisch in der Hülse geführt ist und in Längsrichtung der Hülse derartig bewegbar ist, dass der Stössel unterschiedlich tief in die Hülse eingeführt werden kann und in verschiedenen Stellungen gehalten werden kann, die dementsprechend durch unterschiedliche Einführtiefen des Stössels gekennzeichnet sind. Im Innern der Hülse sind drei (in Längsrichtung der Hülse) aufeinanderfolgende, gegeneinander abdichtbare Räume (im Folgenden "Dichträume") angeordnet, wobei jeweils zwei benachbarte Räume durch jeweils eine Dichtmanschette getrennt sind. Die jeweiligen Dichtmanschetten weisen jeweils eine Durchgangsöffnung auf, durch welche der Stössel geführt und welche - je nach Einführtiefe des Stössels und je nach der räumlichen Lage des Taillenabschnitts bzw. der Flanschabschnitte des Stössels - mithilfe des Stössels geschlossen werden können. In einer Stellung des Stössels sind der Taillenabschnitt bzw. die Flanschabschnitte relativ zu den Dichtmanschetten derart angeordnet, dass der Taillenabschnitt zwei der hintereinander in der Hülse angeordneten Dichtmanschetten berührungslos durchgreift, sodass drei von den beiden Dichtmanschetten getrennte, jedoch über die Durchgangsöffnungen der Dichtmanschetten miteinander kommunizierende Dichträume entstehen. Bei anderen Einführtiefen des Stössels, bei denen einer der Flanschabschnitte gegen eine der Manschetten dichtend anliegt, werden hingegen jeweils zwei benachbarte Dichträume gebildet, die miteinander kommunizieren, jedoch gegenüber dem jeweiligen dritten Dichtraum abgedichtet sind. Damit lassen sich durch einfache Verstellungen der Einführtiefe des Stössels drei unterschiedliche Dichtraum-Kombinationen bilden, welche die Brüh-, Drainage- und Entkalkungsfunktion des Drainageventils realisieren. Ein solchermassen einfach aufgebautes Drainageventil ist fertigungstechnisch leicht herstellbar, zuverlässig und kostengünstig.

Bevorzugt sind in der vorstehend beschriebenen, konkreten Ausgestaltung der Brühvorrichtung ein Zulauf für die von dem Brühflüssigkeitsbehälter kommende Brühflüssigkeit und ein Ablauf für die von der Brüheinheit kommende Drainageflüssigkeit in dem Dichtraum des Drainageventils gebildet, der zwischen den zwei in der Hülse angeordneten Dichtmanschetten liegt. Dies lässt eine besonders einfache Funktionszuordnung der äusseren Dichträume zum Brüh- bzw. zum Entkalkungsprozess zu, die einen jeweils klar voneinander getrennten Flüssigkeitspfad bilden. Durch einfache Verbindung aller drei Dichträume hingegen ist eine Drainage der Brüheinheit möglich. All dies erfordert dabei lediglich eine entsprechende Verschiebung des Stössels in der Hülse, die einfach automatisiert werden kann. Dabei ist bevorzugt ein linearer Schrittmotor zum Verstellen des Stössels in dem Drainageventil vorgesehen.

Weitere Einzelheiten der Erfindung werden anhand einer beispielhaften Ausführungsform der Brühvorrichtung im Folgenden anhand der beigefügten Zeichnungen erläutert. Gleiche oder gleichwirkende Teile sind mit gleichen Bezugsziffern versehen. Es zeigen:
- Fig. 1: das Fluidsystem einer erfindungsgemässen Brühvor- richtung mit einem Drainageventil;
- Fig. 2: einen Längsschnitt durch das Drainageventil der Figur 1 in seiner Brühstellung;
- Fig. 3: einen Längsschnitt durch das Drainageventil der Figur 2 in seiner Drainagestellung;
- Fig. 4: einen Längsschnitt durch das Drainageventil der Figur 2 in seiner Entkalkungsstellung, und
- Fig. 5: einen Längsschnitt durch die Brühvorrichtung der Figur 1 mit dem darin verbauten Drainageventil.

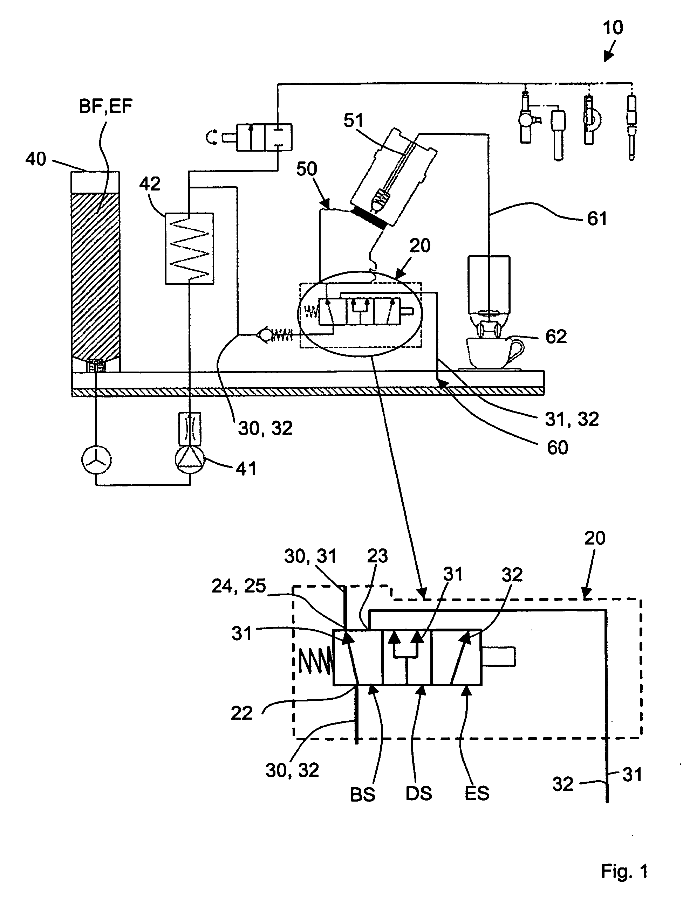

Die Figur 1 zeigt das Fluidsystem einer erfindungsgemässen Brühvorrichtung 10 mit einem Drainageventil 20. Die Vorrichtung 10 soll hier eine Kaffeemaschine darstellen, in der das Drainageventil 20 zum einen in einem Brühflüssigkeits- bzw. Brühwasserpfad 30 für eine Brühflüssigkeit BF (beispielsweise Wasser) angeordnet ist, der sich zwischen einem Brühflüssigkeits- bzw. Brühwasserbehälter 40 (im Folgenden "Behälter 40") und einer Brüheinheit 50 erstreckt. Andererseits ist das Drainageventil 20 in einem Drainageflüssigkeits- bzw. Restwasserpfad 31 angeordnet, der sich zwischen der Brüheinheit 50 und einem Auslass 60, welcher z.B. in eine Restwasserschale mündet, erstreckt. Weiterhin ist ein Entkalkungsflüssigkeitspfad 32 für eine Entkalkungsflüssigkeit EF vorhanden, welcher sich von dem Behälter 40 über das Drainageventil 20 zum Auslass 60 erstreckt und über den eine Entkalkungsflüssigkeit (zum Entkalken des Fluidsystems) geführt werden kann.

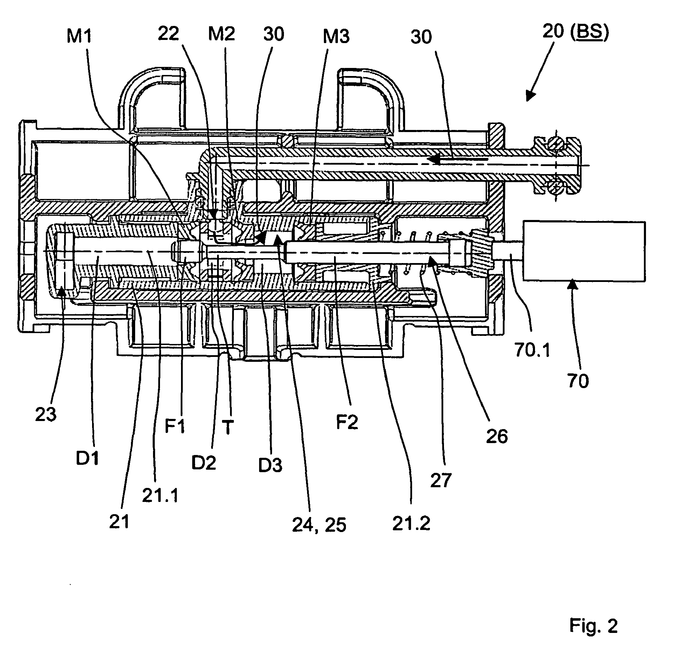

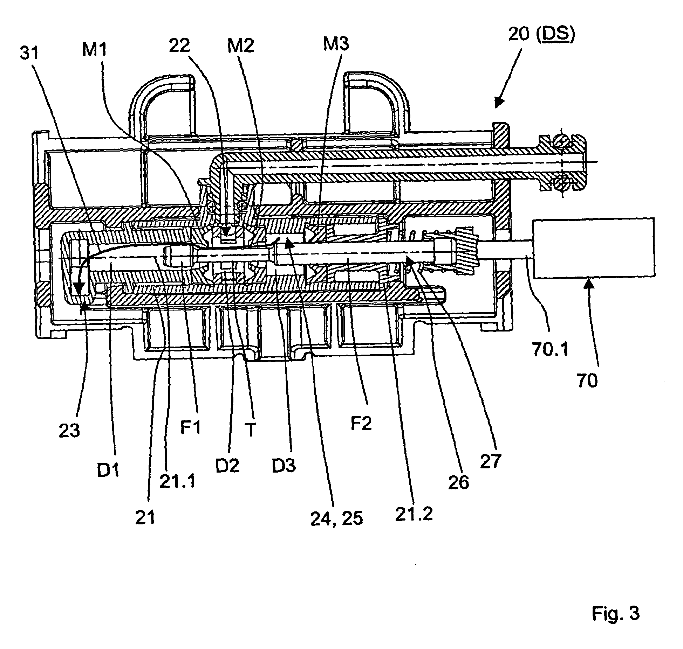

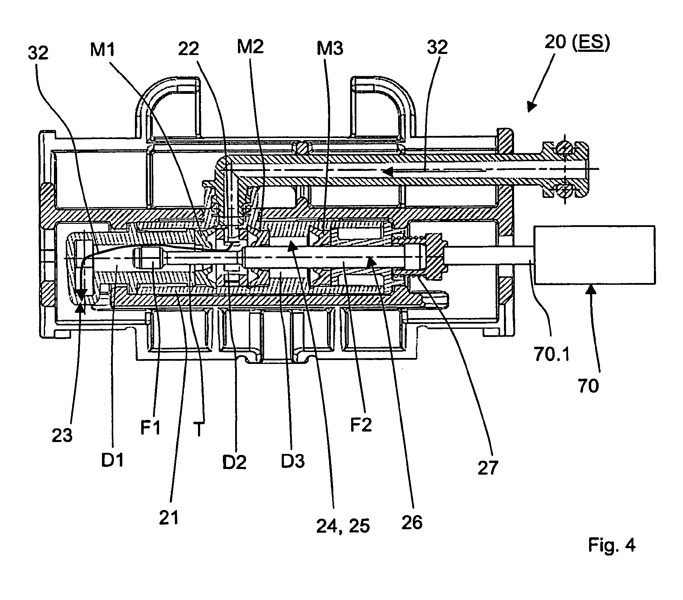

In einer Brühstellung BS des Drainageventils 20 kann, wie im Zusammenhang mit Fig. 2 noch näher erläutert wird, der Brüheinheit 50 Brühwasser von dem Behälter 40 zugeführt werden. Dazu ist in dem Brühwasserpfad 30 eine Förderpumpe 41 und ein Thermoblock 42 zum Erhitzen der jeweils über den Brühwasserpfad 30 transportierten Flüssigkeit angeordnet. In einer Drainagestellung DS des Drainageventils 20 wird, wie im Zusammenhang mit Fig. 3 noch näher erläutert wird, eine Verbindung zwischen Brüheinheit 50 und Auslass 60 geschaffen, über welche das aus dem Kaffeekuchen ausgepresste Restwasser ablaufen kann. Schliesslich wird in einer Entkalkungsstellung ES des Drainageventils 20, wie im Zusammenhang mit Fig. 4 noch näher erläutert wird, eine Verbindung zwischen dem Behälter 40 und dem Auslass 60 hergestellt, um das Fluidsystem ohne Einbeziehung der Brüheinheit 50 zu reinigen. Diese kann dadurch nicht beschädigt bzw. der Kaffeegeschmack nicht beeinträchtigt werden.

Die drei Ventilstellungen BS, DS, ES des Drainageventils 20 können je nach Bedarf durch einen linearen Schrittmotor 70 angefahren werden, der in den nachfolgenden Figuren 2 bis 4 in Verbindung mit diesen Stellungen gezeigt ist. Der lineare Schrittmotorantrieb hat dabei gegenüber einem Elektromagnetantrieb den Vorteil, dass mehrere Positionen angefahren werden können und dass dieser Antrieb zudem sehr leise ist.

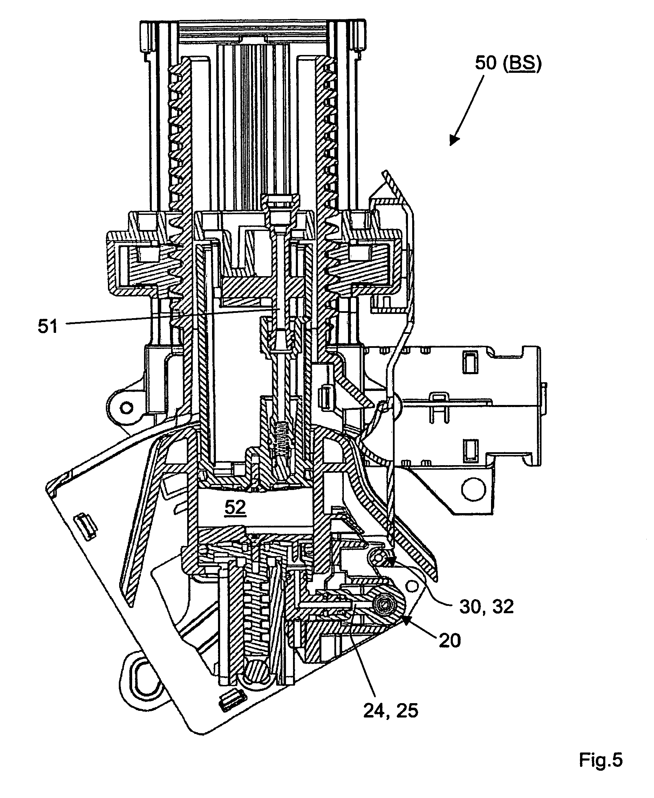

Beim Brühvorgang selbst wird das Wasser von dem Behälter 40 via Pumpe 41 weiter über das Drainageventil 20 in den Brühraum der Brüheinheit 50 gepumpt. In einer Brühkammer 52 der Brüheinheit 50, welche im Zusammenhang mit Fig. 5 noch näher erläutert wird, baut sich dann so lange ein Brühdruck auf, bis der Gegendruck eines Crema-Ventils kleiner wird und dieses öffnet. Nach dem Öffnen des Crema-Ventils gelangt nun der gebrühte Kaffee über ein Steigrohr 51 zu einem Brühflüssigkeits- bzw. Kaffeeauslass 61 und in eine Tasse 62.

Die Figur 2 zeigt einen Längsschnitt durch das Drainageventil 20 der Figur 1 in einer Brühstellung BS eines Stössels 26. Am oberen Umfang einer Hülse 21 des Drainageventils 20 ist ein Zulauf 22 für Brühwasser angebracht, während sich ein Ablauf 23 für Restwasser am (linken) unteren Umfang der Hülse 21 befindet. Ein Ablauf 25 für Restwasser aus der Brüheinheit 50 und ein Zulauf 24 für Brühwasser zu der Brüheinheit 50 sind als gemeinsamer Brüh- und Drainageanschluss 24, 25 ausgeführt, der sich von der Hülse 21 ausgehend nach hinten und oben erstreckt.

Wie Fig. 2-4 zu entnehmen ist, sind im Innern der Hülse 21 (in Längsrichtung der Hülse hintereinander) Dichtmanschetten M1, M2 und M3 jeweils in einem Abstand voneinander angeordnet, sodass die Dichtmanschette M1, M2 und M3 drei (in Längsrichtung der Hülse hintereinander) angeordnete Dichträume begrenzen: (i) einen Dichtraum D1 zwischen der Dichtmanschette M1 und dem Ablauf 23, (ii) einen Dichtraum D2 zwischen den Dichtmanschetten M1 und M2 und (iii) einen Dichtraum D3 zwischen den Dichtmanschetten M2 und M3. Die Dichtmanschetten M1, M2 und M3 weisen jeweils zentrale Durchgangsöffnungen im Bereich der Längsachse 21.1 der Hülse 21 auf. Diese Durchgangsöffnungen können mithilfe eines Stössels 26, der entlang der Längsachse 21.1 der Hülse 21 bewegbar und jeweils durch die genannten Durchgangsöffnungen führbar ist, verschlossen oder durchgängig gemacht werden (je nach Anordnung des Stössels 26 relativ zu den Manschetten M1, M2 und M3). Zu diesem Zweck weist der Stössel 26 drei (in der Längsrichtung des Stössels 26) hintereinander angeordnete Längsabschnitte mit unterschiedlichem Durchmesser auf: zwei in einem Abstand voneinander angeordnete Flanschabschnitte F1 und F2 mit jeweils gleichem Durchmesser und einen zwischen den Flanschabschnitten F1 und F2 angeordneten Taillenabschnitt T (mit einem geringeren Durchmesser als die Flanschabschnitte F1 und F2).

Die Durchmesser der Flanschbereiche F1 und F2 sind so bemessen, dass sich die Durchgangsöffnungen der Dichtmanschetten M1, M2 bzw. M3 mithilfe eines der Flanschabschnitte F1 bzw. F2 verschliessen und somit abdichten lassen, während der Taillenabschnitt T die jeweilige Durchgangsöffnung einer der Dichtmanschetten M1, M2 bzw. M3 gegebenenfalls durchdringen kann, ohne die jeweilige Dichtmanschette zu berühren. Die Länge des Taillenabschnitts T ist so bemessen, dass der Taillenabschnitt T bei einer Stellung des Stössels 26 (siehe Fig. 3) beispielsweise die Dichtmanschetten M1, M2 berührungslos durchtritt, so dass die Durchgangsöffnungen der Dichtmanschetten M1, M2 für eine Flüssigkeit durchgängig sind und somit alle Dichträume D1, D2 und D3 als miteinander kommunizierende Räume ausgebildet sind. Bei anderen Stellungen des Stössels 26 (siehe Fig. 2 und 4) können die Durchgangsöffnungen der Dichtmanschetten M1, M2 bzw. M3 mithilfe eines der Flanschabschnitte F1 bzw. F2 wahlweise verschlossen werden, sodass bei diesen Stellungen entweder die Dichträume D1 und D2 miteinander kommunizieren können (ohne dass eine durchgängige Verbindung zum Dichtraum D3 besteht) oder die Dichträume D2 und D3 miteinander kommunizieren können (ohne dass eine durchgängige Verbindung zum Dichtraum D1 besteht). Demnach können durch Verstellen des Stössels 26 unterschiedliche Kombinationen von miteinander kommunizierenden Dichträumen D1-D3 realisiert werden. Der Stössel 26 selbst wird über den linearen Schrittmotor 70 bewegt.

Die Dichtmanschetten M1, M2 und M3 weisen jeweils am Rand ihrer Durchgangsöffnung eine flexible Dichtlippe auf, welche bei Einwirkung eines Flüssigkeitsdrucks gegen den Stössel 26 bzw. einen der Flanschabschnitte F1 oder F2 derart pressbar ist, dass die jeweilige Dichtmanschette gegen den Stössel 26 abdichtbar ist. Die Dichtmanschetten M1, M2, M3 werden dabei durch den beaufschlagten Druck zusätzlich schwalbenschwanzartig geweitet, um ihre Pressung gegen den Flanschabschnitt F1, F2 zu erhöhen.

Derartige Dichtmanschetten haben den Vorteil, dass sie eine geringe Reibung gegenüber dem Stössel 26 gewährleisten und bei einem Kontakt mit dem Stössel 26 selbst dann für eine ausreichende Dichtheit gegenüber einer Flüssigkeit sorgen, wenn die jeweiligen Teile (Dichtmanschetten, Stössel) Toleranzabweichungen haben. Der Stössel 26 ist bevorzugt aus einem Metall gefertigt und hat eine polierte Oberfläche. Unter diesen Umständen kann die jeweilige Stellung des Stössels 26 mit einer besonders kleinen Kraft verändert werden, sodass der Schrittmotor 70 nur dementsprechend kleine Kräfte aufbringen muss und entsprechend ausgelegt werden kann. Weiterhin sind relativ grosse Toleranzen hinsichtlich der Form der Dichtmanschetten akzeptabel. Der Stössel könnte allerdings auch aus Kunststoff hergestellt werden, wobei die Toleranz hinsichtlich der Abmessungen der jeweiligen Teile grösser ist als bei einem Stössel aus Metall.

Wie die Fig. 3-5 zeigen, ist der Stössel 26 im Bereich des Flanschabschnitts F2 durch eine Durchgangsöffnung eines Einsatzes 21.2, welcher in einen Endabschnitt der Hülse 21 eingesetzt ist, geführt. Der Einsatz 21.2 ist derart ausgebildet, dass der Stössel 26 in seiner Längsrichtung relativ zum Einsatz 21.2 bewegbar ist. Der Schrittmotor 70 umfasst eine angetriebene Schubstange 70.1, die im Betrieb des Schrittmotors 70 linear in Richtung ihrer Längserstreckung bewegbar ist, und ist relativ zum Drainageventil 20 derart angeordnet, dass ein Ende der Schubstange 70.1 gegen das aus der Hülse 21 herausragende Ende des Stössels 26 stösst und in der Längsrichtung des Stössels 26 bewegbar ist.

Im vorliegenden Beispiel ist der Stössel 26 nicht starr mit dem Schrittmotor 70 verbunden, sondern lediglich mit der Schubstange 70.1 in Kontakt gebracht, um eine mechanische Kopplung zwischen dem Stössel 26 und dem Schrittmotor 70 zu erreichen. Diese Art der Kopplung zwischen dem Stössel 26 und dem Schrittmotor 70 vereinfacht den Ausbau der Brüheinheit 50 aus der Brühvorrichtung 10 und vereinfacht eine Wartung der Brühvorrichtung 10, zumal die Brüheinheit 50 zusammen mit dem Drainageventil 20, aber unabhängig von dem Schrittmotor 70 aus der Brühvorrichtung 10 ausgebaut werden kann, ohne dass eine starre Verbindung zum Schrittmotor 70 gelöst werden muss.

Um zu gewährleisten, dass der Stössel 26 in Kontakt mit der Schubstange 70.1 bleibt, wenn die Schubstange 70.1 im Betrieb des Schrittmotors 70 in ihrer Längsrichtung hin- und herbewegt wird, ist das aus der Hülse 21 herausragende Ende des Stössels 26 über eine Feder 27 auf dem Einsatz 21.2 abgestützt. Demnach wird die Feder 27 gespannt, wenn der Stössel 26 mittels der Schubstange 70.1 in die Hülse 21 hinein gedrückt wird. Wird die Distanz zwischen der Schubstange 70.1 und dem Einsatz 21.2 wieder vergrössert, so drückt die Feder 27 - sofern sie gespannt ist - den Stössel 26 gegen die Schubstange 70.1 und hält die Schubstange 70.1 in Kontakt mit dem Stössel 26. Im vorliegenden Fall ist die Feder 27 so dimensioniert, dass die Feder 27 - ohne Einwirkung zusätzlicher Kräfte, d.h. insbesondere ohne Mitwirkung des Schrittmotors 70 - den Stössel 26 so weit aus der Hülse 21 heraus drückt, dass der Flanschteil F1 des Stössels 26 die Durchgangsöffnung der Dichtmanschette M1 verschliesst. Diese Stellung des Drainageventils 20 wird in diesem Zusammenhang als "Grundstellung" des Drainageventils 20 angesehen. Diese Grundstellung entspricht der zuvor genannten Brühstellung BS.

Abweichend von der vorstehend genannten Konstruktion ist es natürlich auch möglich, die Schubstange 70.1 des Schrittmotors 70 über eine starre Verbindung mit dem Stössel 26 zu koppeln. In diesem Fall könnte auf die Feder 26 verzichtet werden.

In der Figur 2 ist die Brühstellung BS (sogenannte "0-Stellung" oder "Kaffeestellung") des Stössels 26 gezeigt. Diese Stellung ist bei ausgeschaltetem Zustand, bei Kaffeebereitschaft und beim Kaffeebezug aktiv. Der Ventildurchgang zum Brühraum bzw. zur Brühkammer 52 ist dabei über die Dichträume D2, D3 offen, die Durchgangsöffnungen der Dichtmanschetten M1 und M3 sind verschlossen. Bei dieser Stellung des Stössels 26 kann eine Brühflüssigkeit BF (z.B. Wasser) über den Brühflüssigkeitspfad 30, welcher den Zulauf 22 und die Dichträume D2 und D3 und den Ablauf 24 umfasst, in den Brühraum bzw. die Brühkammer 52 gelangen, wie in Fig. 2 durch mehrere mit dem Kennzeichen "30" gekennzeichnete Pfeile angedeutet ist.

Die Figur 3 zeigt einen Längsschnitt durch das Drainageventil 20 der Figur 2 in einer Drainagestellung DS des Stössels 26. Diese Ventilstellung wird unmittelbar nach dem Brühvorgang angefahren. Der Ventildurchgang vom gemeinsamen Brüh- und Drainageanschluss 24, 25 zum Ablauf 23 für das Restwasser ist in dieser Stellung über alle Dichträume D1, D2 und D3 hinweg geöffnet. Die Brühvorrichtung presst das Kaffeepulver aus, das Restwasser (Drainageflüssigkeit) läuft über den Drainageflüssigkeitspfad 31, welcher die Dichträume D1, D2, D3 und den Ablauf 23 und den Auslass 60 umfasst, z.B. in eine Restwasserschale (wie in Fig. 3 durch einen mit dem Kennzeichen "31" versehenen Pfeil angedeutet ist). Diese Auspressung ist deshalb nötig, damit der Kaffeekuchen kompakt zusammenhängend gepresst und dadurch ohne Probleme trocken aus der Brühvorrichtung ausgeworfen werden kann und eine saubere Brühkammer 52 hinterlässt.

Die Figur 4 zeigt einen Längsschnitt durch das Drainageventil 20 der Figur 2 in seiner Entkalkungsstellung ES. Diese Ventilstellung wird nur während des ganzen Entkalkungsprozesses angesteuert. Dazu kann ein automatisches Entkalkungsprogramm vorgesehen sein, mit dem das Fluidsystem bei Bedarf von Kalk befreit wird. Der Ventildurchgang von dem Zulauf 22 für die Brühflüssigkeit BF bzw. die Entkalkungsflüssigkeit EF zu dem Ablauf 23 für das Restwasser über die Dichträume D2, D1 hinweg ist dann geöffnet. Die Durchgangsöffnung der Dichtmanschette M2 ist allerdings durch den Flanschteil F2 des Stössels 26 verschlossen. Somit ist der Dichtraum D3 für die Entkalkungsflüssigkeit EF, welche dem Entkalkungsflüssigkeitspfad 32 folgt, nicht zugänglich. Dadurch wird sichergestellt, dass die Entkalkungsflüssigkeit nicht in die Brüheinheit 50 gelangt, sondern gezielt über den Auslass 60 z.B. in die Restwasserschale abgeleitet wird. Dies ist deshalb nötig, weil das Material der Brüheinheit nicht gegen die Entkalkungsflüssigkeit EF beständig ist und dadurch die Lebensdauer der Brüheinheit 50 massiv verlängert werden kann. In Fig. 4 repräsentieren mit dem Kennzeichen "32" versehene Pfeile den Fluss der Entkalkungsflüssigkeit längs des Entkalkungsflüssigkeitspfads 32.

Die Figur 5 zeigt einen Längsschnitt durch die Brüheinheit 50 der Figur 1 mit dem darin verbauten Drainageventil 20. Das Drainageventil 20 ist dabei an einem unteren Ende der Brüheinheit 50 in waagerechter Einbaulage verbaut. Der gemeinsame Brüh- und Drainagekanal 24, 25 verläuft von dem Drainageventil 20 weg nach oben zu der Brühkammer 52 der Brüheinheit 50. Der gebrühte Kaffee wird über das Steigrohr 51 dem Kaffeeauslass 61 und der Tasse 62 zugeführt.

Gemäss der hier beschriebenen Ausführungsform der erfindungsgemässen Brühvorrichtung kann damit eine Lenkung der in dem Fluidsystem geführten Flüssigkeiten über nur ein einziges Drainageventil so vorgenommen werden, dass keine Beeinträchtigung der Funktion und Lebensdauer der Brüheinheit auftritt. Die Brühvorrichtung ist damit einfach aufgebaut, was deren Zuverlässigkeit erhöht und gleichzeitig einen Kostenvorteil mit sich bringt.

## Patentansprüche

1. Brühvorrichtung (10), insbesondere für Kaffee, mit einem Drainageventil (20), das einerseits in einem Brühflüssigkeitspfad (30) zwischen einem Brühflüssigkeitsbehälter (40) und einer Brüheinheit (50) der Brühvorrichtung (10) und andererseits in einem Drainageflüssigkeitspfad (31) zwischen der Brüheinheit (50) und einem Auslass (60) der Brühvorrichtung (10) angeordnet ist, wobei in einer Brühstellung (BS) des Drainageventils (20) der Brühflüssigkeitspfad (30) freigegeben und der Drainageflüssigkeitspfad (31) blockiert ist,
**gekennzeichnet durch**
eine Drainagestellung (DS) des Drainageventils (20), bei welcher sowohl der Drainageflüssigkeitspfad (31) als auch der Brühflüssigkeitspfad (30) freigegeben sind, und eine Entkalkungsstellung (ES) des Drainageventils (20), bei welcher der Brühflüssigkeitspfad (30) blockiert und ein Entkalkungsflüssigkeitspfad (32) zwischen dem Brühflüssigkeitsbehälter (40) und dem Auslass (60) über das Drainageventil (20) hinweg hergestellt ist.

2. Brühvorrichtung (10) nach Anspruch 1, bei welcher das Drainageventil (20) eine zylinderförmige Hülse (21) mit einem Zulauf (22) für die von dem Brühflüssigkeitsbehälter (40) kommende Brühflüssigkeit (BF) und einem Ablauf (23) für die von der Brüheinheit (50) kommende Drainageflüssigkeit aufweist, die so an deren Umfang versetzt voneinander angeordnet sind, dass bei waagerechter Einbaulage der Hülse (21) deren Zulauf (22) an einer höheren Stelle als deren Ablauf (23) liegt.

3. Brühvorrichtung (10) nach Anspruch 1 oder 2, bei welcher das Drainageventil (20) einen Ablauf (24) für die zu der Brüheinheit (50) fliessende Brühflüssigkeit (BF) und einen Zulauf (25) für die von der Brüheinheit (50) kommende Drainageflüssigkeit aufweist, und dieser Ablauf (24) und dieser Zulauf (25) als gemeinsamer Brüh- und Drainageanschluss ausgeführt sind.

4. Brühvorrichtung (10) nach einem der vorstehenden Ansprüche, bei welcher das Drainageventil (20) einen taillierten Stössel (26) aufweist, der zentrisch in einer Hülse (21) geführt ist und in eine Stellung (DS) bringbar ist, bei welcher ein Taillenabschnitt (T) des Stössels (26) zwei hintereinander in der Hülse (21) angeordnete Dichtmanschetten (M1, M2) berührungslos durchgreift, so dass die beiden Dichtmanschetten (M1, M2) drei miteinander kommunizierende, jeweils an mindestens eine der Dichtmanschetten grenzende Dichträume (D1, D2, D3) trennen.

5. Brühvorrichtung (10) nach Anspruch 4, wobei der Stössel (26) an jedem der beiden Enden des Taillenabschnitts (T) jeweils einen Flanschabschnitt (F1, F2) aufweist und wahlweise in eine von zwei Stellungen (BS, ES) bringbar ist, bei denen jeweils einer der Flanschabschnitte (F1, F2) gegen eine der Dichtmanschetten (M1, M2) dichtend anliegt und der Taillenabschnitt die jeweils andre Dichtmanschette berührungslos durchgreift, sodass jeweils zwei der Dichträume (D1, D2; D2, D3) miteinander kommunizierend sind und gegenüber dem jeweils dritten Dichtraum (D3; D1) abgedichtet sind.

6. Brühvorrichtung (10) nach Anspruch 5, bei welcher ein Zulauf (22) für die von dem Brühflüssigkeitsbehälter (40) kommende Brühflüssigkeit (BF) in dem Dichtraum (D2) des Drainageventils (20) gebildet ist, der zwischen den zwei in der Hülse (21) angeordneten Dichtmanschetten (M1, M2) liegt.

7. Brühvorrichtung nach Anspruch 6, wobei der Ablauf (24) für die zu der Brüheinheit (50) fliessende Brühflüssigkeit (BF), der Zulauf (22) für die von dem Brühflüssigkeitsbehälter (40) kommende Brühflüssigkeit (BF) und der Ablauf (23) für die vom Drainageventil (20) abfliessende Drainageflüssigkeit in jeweils verschiedene Dichträume (D1, D2, D3) münden.

8. Brühvorrichtung nach einem der Ansprüche 4-7, bei welcher ein linearer Schrittmotor (70) zum Verstellen des Stössels (26) in dem Drainageventil (20) vorgesehen ist.

## Claims

1. A brewing device (10), in particular for coffee, comprising a drainage valve (20), which is arranged on the one side in a brewing liquid path (30) between a brewing liquid container (40) and a brewing unit (50) of the brewing device (10) and on the other side in a drainage liquid path (31) between the brewing unit (50) and an outlet (60) of the brewing device (10), wherein the brewing liquid path (30) is released in a brewing position (BS) of the drainage valve (20) and the drainage liquid path (31) is blocked,
**characterized by**
a drainage position (DS) of the drainage valve (20), in the case of which the drainage liquid path (31) as well as the brewing liquid path (30) are released, and by a decalcification position (ES) of the drainage valve (20), in response to which the brewing liquid path (30) is blocked and a decalcification liquid path (32) is established between the brewing liquid container (40) and the outlet (60) beyond the drainage valve (20).

2. The brewing device (10) according to claim 1, in the case of which the drainage valve (20) encompasses a cylindrical sleeve (21) comprising an intake (22) for the brewing liquid (BF) coming from the brewing liquid container (40) and a drain (23) for the drainage liquid coming from the brewing unit (50), which are arranged on the periphery thereof so as to be offset from one another such that, in response to the horizontal installation position of the sleeve (21), the intake (22) thereof is located at a higher location than the drain (23) thereof.

3. The brewing device (10) according to claim 1 or 2, in the case of which the drainage valve (20) encompasses a drain (24) for the brewing liquid (BF) flowing to the brewing unit (50) and an intake (25) for the drainage liquid coming from the brewing unit (50), and this drain (24) and this intake (25) are embodied as a common brewing and drainage connection.

4. The brewing device (10) according to one of the preceding claims, in the case of which the drainage valve (20) encompasses a tapered push rod (26), which is centrically guided in a sleeve (21) and which can be brought into a position (DS), in which a waist section (T) of the push rod (26) engages through two sealing collars (M1, M2), which are arranged behind one another in the sleeve (21), in a contact-free manner, so that the two sealing collars (M1, M2) separate three sealing spaces (D1, D2, D3), which communicate with one another and which in each case adjoin at least one of the sealing collars.

5. The brewing device (10) according to claim 4, wherein the push rod (26) in each case encompasses a flange section (F1, F2) at each of the two ends of the waist section (T) and can be selectively brought into one of two positions (BS, ES), in the case of which one of the flange sections (F1, F2) in each case abuts against one of the sealing collars (M1, M2) so as to form a seal and the waist section engages through the respective other sealing collar in a contact-free manner, so that two of the sealing spaces (D1, D2; D2, D3) in each case communicate with one another and are sealed from the respective third sealing space (D3; D1).

6. The brewing device (10) according to claim 5, in the case of which an intake (22) for the brewing liquid (BF) coming from the brewing liquid container (40) is formed in the sealing space (D2) of the drainage valve (20), which is located between the two sealing collars (M1, M2) arranged in the sleeve (21).

7. The brewing device according to claim 6, wherein the drain (24) for the brewing liquid (BF) flowing to the brewing unit (50), the intake (22) for the brewing liquid (BF) coming from the brewing liquid container (40) and the drain (23) for the drainage liquid draining from the drainage valve (20) in each case flow into different sealing spaces (D1, D2, D3).

8. The brewing device according to one of claims 4-7, in the case of which provision is made for a linear stepper motor (70) for adjusting the push rod (26) in the drainage valve (20).

## Revendications

1. Dispositif d'infusion (10), notamment pour du café, avec une soupape de drainage (20), qui est disposée d'une part dans un chemin du liquide d'infusion (30) entre un réservoir de liquide d'infusion (40) et une unité d'infusion (50) du dispositif d'infusion (10) et d'autre part dans un chemin du liquide de drainage (31) entre l'unité d'infusion (50) et une sortie (60) du dispositif d'infusion (10), dans une position d'infusion (BS) de la soupape de drainage (20) le chemin du liquide d'infusion (30) étant libéré et le chemin du liquide de drainage (31) étant bloqué, **caractérisé par**
une position de drainage (DS) de la soupape de drainage (20), dans laquelle aussi bien le chemin du liquide de drainage (31) que le chemin du liquide d'infusion (30) sont libérés et une position de détartrage (ES) de la soupape de drainage (20), dans laquelle le chemin du liquide d'infusion (30) est bloqué et un chemin du liquide de détartrage (32) est créé entre le réservoir pour liquide d'infusion (40) et la sortie (60), en passant par la soupape de drainage (20).

2. Dispositif d'infusion (10) selon la revendication 1, sur lequel la soupape de drainage (20) comporte une douille de forme cylindrique (21) avec une arrivée (22) pour le liquide d'infusion (BF) arrivant du réservoir pour liquide d'infusion (40) et un écoulement (23) pour le liquide de drainage arrivant de l'unité d'infusion (50), qui sont disposés en étant décalés sur le pourtour de celle-ci de sorte que si la douille (21) est montée en position horizontale, son arrivée (22) soit placée à un niveau plus élevé que son écoulement (23).

3. Dispositif d'infusion (10) selon la revendication 1 ou 2, sur lequel la soupape de drainage (20) comporte un écoulement (24) pour le liquide d'infusion (BF) s'écoulant vers l'unité d'infusion (50) et une arrivée (25) pour le liquide de drainage arrivant de l'unité d'infusion (50) et ledit écoulement (24) et ladite arrivée (25) sont réalisés en tant que raccord commun d'infusion et de drainage.

4. Dispositif d'infusion (10) selon l'une quelconque des revendications précédentes, sur lequel la soupape de drainage (20) comporte un coulisseau taillé (26) qui est guidé de façon centrée dans une douille (21) et qui est susceptible d'être amené dans une position (DS) dans laquelle une partie de taillant (T) du coulisseau (26) traverse sans contact deux manchettes d'étanchéité (M1, M2) disposées l'une derrière l'autre dans la douille (21), de telle sorte que les deux manchettes d'étanchéité (M1, M2) séparent trois espaces étanches (D1, D2, D3) communiquant entre eux, dont chacun est adjacent à au moins l'une des manchettes d'étanchéité.

5. Dispositif d'infusion (10) selon la revendication 4, le coulisseau (26) comportant sur chacune des deux extrémités de la partie de taillant (T) chaque fois une partie de bride (F1, F2) et étant susceptible d'être amené dans deux positions (BS, ES) au choix, dans lesquelles chaque fois l'une des parties de bride (F1, F2) s'appuie en assurant l'étanchéité contre l'une des manchettes d'étanchéité (M1, M2) et la partie de taillant traverse chaque fois sans contact l'autre manchette d'étanchéité, de telle sorte que chaque fois deux des espaces étanches (D1, D2 ; D2, D3) communiquent entre eux et soient rendus étanches par rapport au troisième espace étanche (D3 ; D1) respectif.

6. Dispositif d'infusion (10) selon la revendication 5, sur lequel une arrivée (22) pour le liquide d'infusion (BF) arrivant du réservoir de liquide d'infusion (40) est conçue dans l'espace étanche (D2) de la soupape de drainage (20) qui se situe entre les deux manchettes d'étanchéité (M1, M2) disposées dans la douille (21).

7. Dispositif d'infusion selon la revendication 6, l'écoulement (24) pour le liquide d'infusion (BF) s'écoulant vers l'unité d'infusion (50), l'arrivée (22) pour le liquide d'infusion (BF) arrivant du réservoir de liquide d'infusion (40) et l'écoulement (23) pour le liquide de drainage s'écoulant à partir de la soupape de drainage (20) débouchant chaque fois dans des espaces étanches (D1, D2, D3) différents.

8. Dispositif d'infusion selon l'une quelconque des revendications 4 à 7, sur lequel il est prévu un moteur linéaire pas à pas (70) pour déplacer le coulisseau (26) dans la soupape de drainage (20).
